# EUROPEAN PATENT APPLICATION

(11) **EP 2 924 819 A1**
(43) Date of publication of application: **30.09.2015**
(21) Application number: 12888974.8
(22) Date of filing: 26.11.2012
(51) Int. Cl.: H01S 3/109, H01S 3/063

(54) **LASER APPARATUS**

(71) Applicant: Mitsubishi Electric Corporation, Tokyo 100-8310 (JP)
(72) Inventor: KURAMOTO, Kyosuke, Tokyo 100-8310 (JP); YANAGISAWA, Takayuki, Tokyo 100-8310 (JP); SHODA, Fumio, Tokyo 100-8310 (JP)
(74) Representative: Pfenning, Meinig & Partner GbR
(86) International application number: PCT/JP2012/080480
(87) International publication number: WO 2014/080520

(57) **Abstract**

Because a laser device is constructed in such a way that the laser device includes a solid-state laser element 3 that has gains for plural different wavelengths in plural different axial directions, and an optical element that has a characteristic of making an optical loss increase with increase in light intensity for each of light beams with the wavelengths, and the solid-state laser element 3 and the optical element are constructed in such a way as to be included in a resonator for fundamental waves which are generated by the solid-state laser element 3, and the laser device oscillates at two or more wavelengths, outputted light beams with the plural different wavelengths can be acquired by using the single solid-state laser element 3. As a result, a small, cheap, and easy to produce laser device can be acquired.

## Description

### FIELD OF THE INVENTION

The present invention relates to a laser device used as a light source such as a projector device.

### BACKGROUND OF THE INVENTION

Light sources of three colors: R (red), G (green), and B (blue) are required as light sources used for a device that displays a color image, such as a projector device or a projection TV.

In recent years, as these light sources, wavelength conversion laser devices that oscillate laser light in a 900 nm band, laser light in a 1 µm band, and laser light in a 1.3 µm band as fundamental laser light, and that convert each fundamental laser light into a second harmonic wave by using a nonlinear material have been developed.

As an example of such a device, there has been provided a device that consists of a semiconductor laser element, a solid-state laser element, and a wavelength conversion element (for example, refer to patent reference 1).

In this device, after the solid-state laser element is made to absorb pumping light generated by the semiconductor laser element to generate a fundamental wave, the wavelength conversion element is made to generate a second harmonic wave of the fundamental wave.

Particularly in a case in which a solid state laser is used as the laser medium that generates the fundamental wave, the wavelength spectrum width of the fundamental wave is very narrow and therefore the wavelength spectrum width of the second harmonic wave is also very narrow.

This characteristic means that the laser light has high coherency. While the high coherency provides various merits, there arises a problem that taking into consideration a case in which the device is used for a display, speckle noise becomes large because interference becomes strong.

As one method of reducing this speckle noise, there is a method of mixing a plurality of wavelengths to reduce the coherency.

In order to acquire a plurality of wavelengths by using laser light sources as mentioned above, fundamental waves with a plurality of wavelengths are generated and wavelength conversion is performed on each of the fundamental waves.

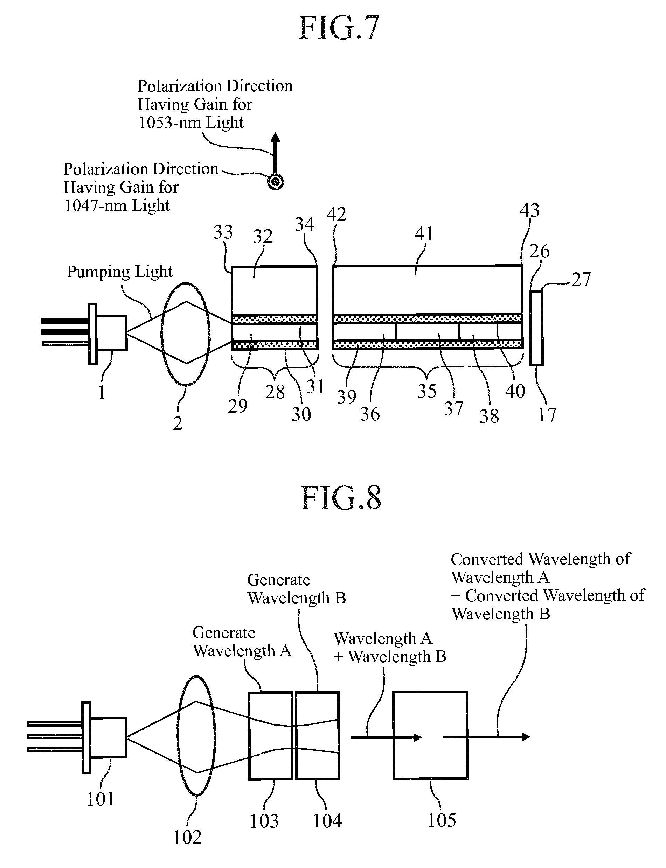

Fig. 8 is a structural diagram of such a wavelength conversion laser device.

In the figure, reference numeral 101 denotes a semiconductor laser that outputs laser light, reference numeral 102 denotes a lens with that focuses the laser light outputted from the semiconductor laser 101, reference numeral 103 denotes a laser medium that generates a wavelength A, and reference numeral 104 denotes a laser medium that generates a wavelength B.

By making both of the laser media 103 and 104 absorb pumping light from the semiconductor laser 101, a fundamental wave with the wavelength A and a fundamental wave with the wavelength B are generated.

By making the fundamental waves enter the wavelength conversion element 105 that can perform wavelength conversion on both the wavelength A and the wavelength B, two wavelength-converted light beams can be extracted.

The same device as this is also disclosed in the following patent reference 2.

### RELATED ART DOCUMENT

### Patent reference

Patent reference 1: WO 2006/No. 103767
Patent reference 2: Japanese Unexamined Patent Application Publication No. 2006-66436

### SUMMARY OF THE INVENTION

### PROBLEMS TO BE SOLVED BY THE INVENTION

A problem with the wavelength conversion laser device shown in Fig. 8 is that the two solid-state laser elements, such as the laser media 103 and 104, are required, and therefore the wavelength conversion laser device is large in size and expensive and it is difficult to produce the wavelength conversion laser device.

The present invention is made in order to solve the above-mentioned problem, and it is therefore an object of the present invention to provide a small, cheap, and easy to produce laser device.

### MEANS FOR SOLVING THE PROBLEM

In accordance with the present invention, there is provided a laser device including: a solid-state laser element that has gains for plural different wavelengths in plural different axial directions; and an optical element that has a characteristic of making an optical loss increase with increase in light intensity for each of light beams with the wavelengths, in which the solid-state laser element and the optical element are constructed in such a way as to be included in a resonator for fundamental waves which are generated by the above-mentioned solid-state laser element, and the laser device oscillates at two or more wavelengths.

### ADVANTAGES OF THE INVENTION

According to the present invention, outputted light beams with plural different wavelengths can be acquired by using the single solid-state laser element.
As a result, there is provided an advantage of being able to provide a small, cheap, and easy to produce laser device.

### BRIEF DESCRIPTION OF THE FIGURES

[Fig. 1] Fig. 1 is a top plan view showing the structure of a wide band laser light source device in accordance with Embodiment 1 of the present invention;
[Fig. 2] Fig. 2 is an explanatory drawing showing the principle of operation of the wide band laser light source device in accordance with Embodiment 1 of the present invention;
[Fig. 3] Fig. 3 is a top plan view showing the structure of a wide band laser light source device in accordance with Embodiment 2 of the present invention;
[Fig. 4] Fig. 4 is an explanatory drawing showing the principle of operation of the wide band laser light source device in accordance with Embodiment 2 of the present invention;
[Fig. 5] Fig. 5 is a top plan view showing the structure of a wide band laser light source device in accordance with Embodiment 3 of the present invention;
[Fig. 6] Fig. 6 is an explanatory drawing showing the principle of operation of the wide band laser light source device in accordance with Embodiment 3 of the present invention;
[Fig. 7] Fig. 7 is a top plan view showing the structure of a wide band laser light source device in accordance with Embodiment 4 of the present invention; and
[Fig. 8] Fig. 8 is a top plan view showing the structure of a conventional wavelength conversion laser device.

### EMBODIMENTS OF THE INVENTION

Hereafter, the preferred embodiments of a wide band laser light source device in accordance with the present invention and a method of producing the wide band laser light source device will be explained by using drawings.

### Embodiment 1.

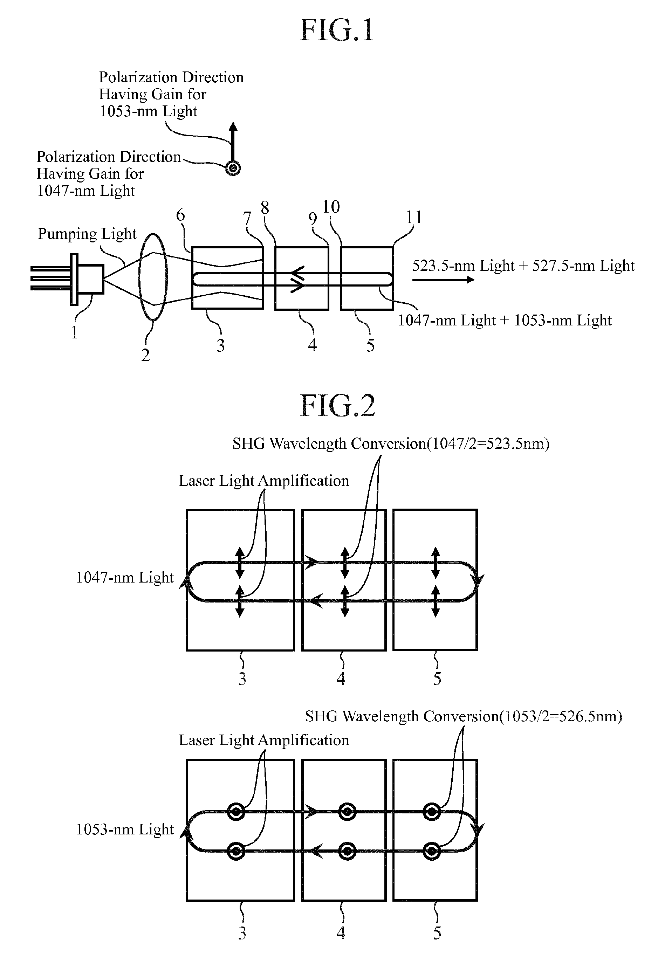

Fig. 1 is a view of the structure of a wide band laser light source device in accordance with Embodiment 1 of the present invention when viewed from a top face thereof.

In the figure, reference numeral 1 denotes a semiconductor laser, and reference numeral 2 denotes a lens that focuses laser light outputted from the semiconductor laser 1.

Reference numeral 3 denotes a solid-state laser element made from an YLF material (Nd:YLF).

This Nd:YLF material has characteristics of a gain peak wavelength in one axial direction being close to 1047 nm and a gain peak wavelength in another axial direction being close to 1053 nm.

This solid-state laser element 3 is placed in such a way that the direction in which the gain peak wavelength is 1047 nm is aligned with a direction perpendicular to the page, and the direction in which the gain peak wavelength is 1053nm is aligned with a direction perpendicular to the page.

The oscillation wavelength of the semiconductor laser 1 is made to be close to 792nm in such a way as to be able to pump the Nd:YLF material which is the solid-state laser element 3.

In front of the solid-state laser element 3, wavelength conversion elements (optical elements) 4 and 5 each of which is made from MgO-doped LiNbO₃ are placed.

The wavelength conversion element 4 has polarization inversion which is formed in such a way as to be able to generate second harmonic generation (SHG) light for 1047-nm light, and the polarization direction of the inverse polarization is perpendicular to the page.

As a result, wavelength conversion can be performed on the 1047-nm light having a polarization direction perpendicular to the page.

The wavelength conversion element 5 has polarization inversion which is formed in such a way as to be able to generate SHG light for 1053-nm light, and the polarization direction of the inverse polarization is parallel to the page.

As a result, wavelength conversion can be performed on the 1053-nm light having a polarization direction parallel to the page.

An end surface 6 of the solid-state laser element 3 has an edge face coating formed thereon and having a characteristic of allowing pumping light with a (Nd:YLF excited wavelength) to pass therethrough and reflecting the 1047-nm light and the 1053-nm light which serve as fundamental waves.

An end surface 7 of the solid-state laser element 3 has a coating formed thereon and having a characteristic of reflecting the pumping light and allowing the fundamental waves and the SHG light beams for the fundamental waves to pass therethrough.

A coating that allows the fundamental waves to pass therethrough and reflects the SHG light beams is formed on an end surface 8 of the wavelength conversion element 4, and a coating that allows the fundamental waves and the SHG light beams to pass therethrough is formed on an end surface 9 of the wavelength conversion element 4 and on an end surface 10 of the wavelength conversion element 5.

A coating that reflects the fundamental waves and allows the SHG light beams to pass therethrough is formed on an end surface 11 of the wavelength conversion element 5.

As the intensity of the pumping light of the semiconductor laser 1 is increased in this laser device, active ions in the solid-state laser element 3 are pumped and population inversion is formed.

Then, a high-gain fundamental wave with a wavelength of 1047 nm oscillates with linear polarization in a direction perpendicular to the page which is a direction having a gain.

This 1047-nm light is converted into SHG light with a wavelength of 523.5 nm having twice as much photon energy as the 1047-nm light by the wavelength conversion element 4.

The 1047-nm light which is a fundamental wave is reduced due to this conversion into SHG light. More specifically, an optical loss occurs.

While the efficiency of conversion into SHG light increases with increase in the light intensity of the fundamental wave because of the nonlinearity of the conversion, this means that the optical loss increases with increase in the light intensity of the fundamental wave.

Therefore, as the optical power of the 1047-nm light increases, a resonator loss of the 1047-nm light increases and a threshold gain becomes high.

As a result, because the number of excited ions which provide a gain for the 1047-nm light increases, and the number of excited ions which are in a state in which the excited ions are in thermal equilibrium with the former excited ions and which provide a gain for the 1053-nm light also increases, the 1053-nm light can oscillate.

At this time, because the gain of the 1053-nm light is generated in a direction parallel to the page, the light oscillates with linear polarization parallel to the page.

This 1053-nm light is converted into 526.5-nm SHG light having twice as much photon energy as the 1053-nm light within the wavelength conversion element 5.

Also in this case, an optical loss occurs due to the conversion into SHG light. More specifically, a resonator loss increases with increase in the light intensity.

As mentioned above, as the light intensity of a fundamental wave with one of the wavelengths increases, the optical loss increases and the gain required to make the fundamental wave oscillate increases, and, as a result of the increasing number of ions in a stationary state, there occurs a phenomenon in which the gain for the other wavelength becomes large and the laser device is made to easily oscillate with the other wavelength, and therefore the two fundamental waves conflict with each other.

While the number N1 of ions in an upper level which provides the threshold gain for the 1047-nm light and the number N2 of ions in an upper level which provides the threshold gain for the 1053-nm light are determined by the amount of optical loss determined by the light intensity of each of the fundamental waves, the laser device oscillates with stability at each light intensity at which N1 and N2 satisfy the thermal equilibrium condition.

Although the laser device enters the equilibrium state while being in the state in which the 1047-nm fundamental wave and the 1053-nm fundamental wave are oscillating simultaneously, a state in which the 1047-nm light is being oscillated independently and a state in which the 1053-nm light is being oscillated independently are described separately in Fig. 2.

The 1047-nm light is wavelength-converted by the wavelength conversion element 4 and the 1053-nm light is wavelength-converted by the wavelength conversion element 5, so that the two wavelengths of 523.5 nm and 526.5 nm are outputted simultaneously.

This state can occur under circumstances where as the light intensity of a fundamental wave increases, the optical loss for the fundamental wave becomes large, that is, only in a system in which the fundamental wave makes a round trip in the solid-state laser element 3 and both the wavelength conversion elements 4 and 5.

Therefore, the state can be implemented in the structure of including the solid-state laser element 3 that has gains for the two different wavelengths and the wavelength conversion elements (optical element) 4 and 5 that provide an optical loss, such as wavelength conversion, for both the wavelengths, and making fundamental waves oscillate in a resonator including both the solid-state laser element 3 and the wavelength conversion elements (optical element) 4 and 5.

Although the example of using Nd:YLF as the solid-state laser element 3 is shown in this Embodiment 1, it is needless to say that the same functions can be implemented as long as a material having a plurality of gain wavelengths is used.

Further, because a conflict between the fundamental waves as shown above occurs even if the polarization directions having gain peaks are not perpendicular to each other, the laser device can oscillate at a plurality of wavelengths.

In addition, although the wavelength conversion elements 4 and 5 are produced and placed independently in this Embodiment 1, they can be formed into a single piece, and, if they are produced simultaneously, they can be produced cheaply and easily.

As mentioned above, the laser device in accordance with this Embodiment 1 is constructed in such a way that the laser device includes the solid-state laser element 3 that has gains for plural different wavelengths in plural different axial directions, and the wavelength conversion elements 4 and 5 that have a characteristic of making an optical loss increase with increase in the light intensity for each of light beams with the wavelengths, and the solid-state laser element 3 and the wavelength conversion elements 4 and 5 are constructed in such a way as to be included in a resonator for fundamental waves which are generated by the solid-state laser element 3, and the laser device oscillates at two or more wavelengths.

Therefore, outputted light beams with the plural different wavelengths can be acquired by using the single solid-state laser element 3.

As a result, a small, cheap, and easy to produce laser device can be acquired.

### Embodiment 2.

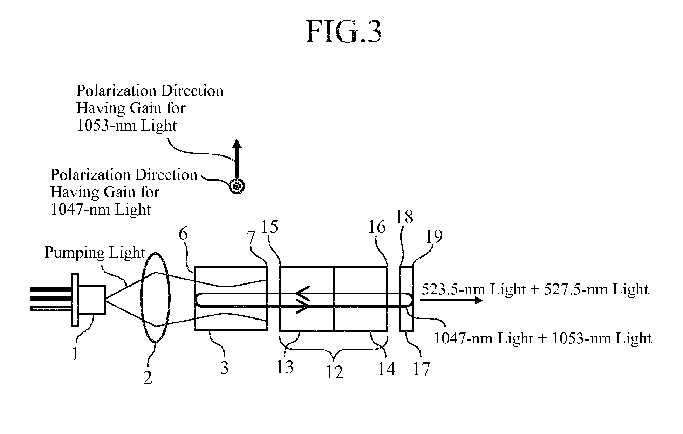

Fig. 3 is a view of the structure of a wide band laser light source device in accordance with Embodiment 2 of the present invention when viewed from a top face thereof.

In the figure, a semiconductor laser 1, a lens 2 that focuses laser light, a solid-state laser element 3, and end surfaces 6 and 7 are the same as those in the case of above-mentioned Embodiment 1.

An end surface 6 of the solid-state laser element 3 has a coating formed thereon and allowing pumping light with a (Nd: YLF excited wavelength) to pass therethrough and reflecting 1047-nm light and 1053-nm light which serve as fundamental waves.

An end surface 7 of the solid-state laser element 3 has a coating formed thereon and reflecting the pumping light and allowing the two fundamental waves to pass therethrough.

In front of the solid-state laser element 3, a wavelength conversion element (optical element) 12 which is made from MgO-doped LiNbO₃ is placed.

The wavelength conversion element 12 is divided into a portion 13 in which polarization inversion having a period with which to generate SHG light for the 1047-nm light is formed in a direction perpendicular to the page, and a portion 14 in which polarization inversion having a period with which to generate SHG light for the 1053-nm light is formed in a direction perpendicular to the page.

In front of this wavelength conversion element 12, a λ/4 shift plate (wavelength shift plate) 17 which can provide an optical path difference of a λ/4 wavelength for both the 1047-nm light and the 1053-nm light is placed.

A coating that allows the two fundamental waves to pass therethrough and reflects the SHG light beams for the two fundamental waves is formed on an end surface 15 of the wavelength conversion element 12, and a coating that allows the two fundamental waves and the SHG light beams for the fundamental waves to pass therethrough is on an end surface 16 of the wavelength conversion element 12, and on an end surface 18 of the λ/4 shift plate 17.

A coating that reflects the two fundamental waves and allows the SHG light beams for the fundamental waves to pass therethrough is formed on an end surface 19 of the λ/4 shift plate 17.

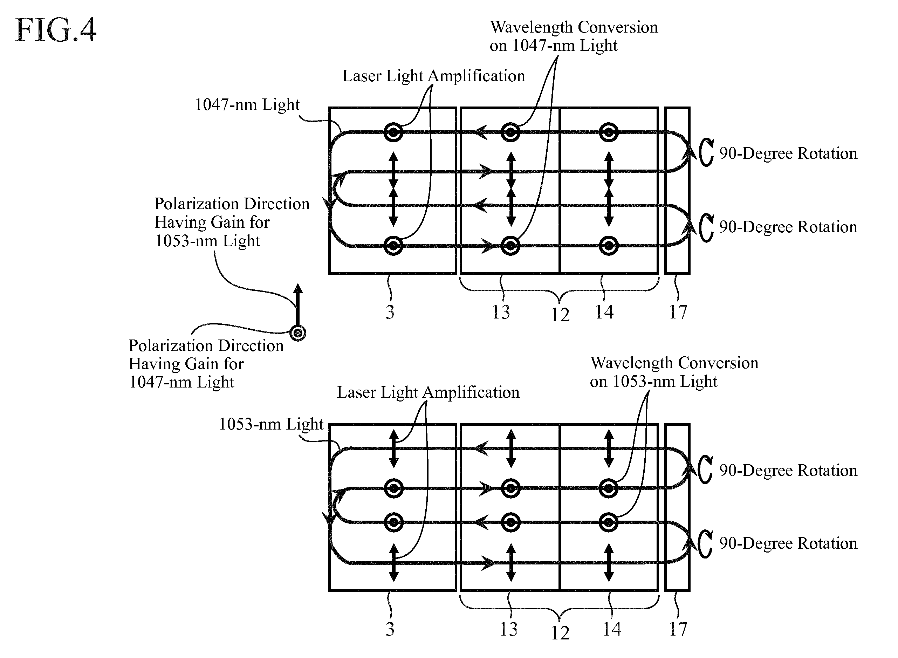

A state of the oscillation of the 1047-nm fundamental wave and the 1053-nm fundamental wave in this device is shown in Fig. 4.

Because the polarization of the 1047-nm light is rotated by 90 degrees during one round trip in the λ/4 plate 17, the polarization is rotated by 180 degrees and then returns to its original polarization state during two round trips.

At any part of the 1047-nm light, a polarization in a direction perpendicular to the page and a polarization in a direction parallel to the page exist.

The portion 13 in the wavelength conversion element 12 generates SHG light for the 1047-nm light perpendicular to the page.

Therefore, as the light intensity of a fundamental wave increases, a resonator loss increases, like in the case of above-mentioned Embodiment 1.

On the other hand, also in the 1053-nm fundamental wave, the polarization returns to its original state during two round trips, like in the 1047-nm fundamental wave.

In this case, SHG light is generated by the portion 14 in the wavelength conversion element 12.

In this embodiment, SHG light is generated for the 1053-nm light perpendicular to the page, unlike in the case of above-mentioned Embodiment 1.

As mentioned above, because also in this Embodiment 2 there occurs a phenomenon in which as the light intensity increases, the resonator loss increases in both the 1047-nm fundamental wave and the 1053-nm fundamental wave, like in the case of above-mentioned Embodiment 1, the 1047-nm fundamental wave and the 1053-nm fundamental wave can oscillate simultaneously.

Further, the 1047-nm light is wavelength-converted by the portion 13 of the wavelength conversion element, and the 1053-nm light is wavelength-converted by the portion 14 of the wavelength conversion element, and, as a result, two wavelengths of 523.5 nm and 526.5 nm are outputted simultaneously.

Although the polarization direction of the 1053-nm fundamental wave is aligned with a direction parallel to the page in the case of above-mentioned Embodiment 1, in this Embodiment 2, by inserting the λ/4 shift plate 17, the fundamental wave has a polarization also in a direction perpendicular to the page, and therefore the direction of the polarization inversion of the portion 14 of the wavelength conversion element 12 can be made to be perpendicular to the page.

By applying a strong electric field to the wavelength conversion element 12, the polarization inversion is formed in a direction of the electric field.

In order to apply a strong electric field, the element thickness in the direction in which the dielectric polarization is applied needs to be small to a certain extent.

Therefore, by making small the thickness of the wavelength conversion element 12 in a direction perpendicular to the page to form inverse polarization in a direction perpendicular to the page, the polarization inversion of both the portions 13 and 14 can be easily formed.

Further, by performing a process with a mask pattern in which the polarization inversion period differs between the portions 13 and 14, the portions 13 and 14 can be formed simultaneously in the wavelength conversion element 12 through the single process.

It is needless to say that a wavelength conversion element having the structure of the portion 13 and a wavelength conversion element having the structure of the portion 14 can be produced independently and can be arranged.

Further, although Fig. 3 is an example in which the number of excitation regions is one, it is difficult to make small the thickness of the wavelength conversion element 12 in a direction parallel to the page in a case in which the single solid-state laser element 3 is pumped by using a plurality of laser light beams arranged along a direction parallel to the page.

Therefore, as a structure as shown in this Embodiment 2, by making small the thickness of the wavelength conversion element 12 in a direction perpendicular to the page and forming polarization inversion in a direction perpendicular to the page for the portions 13 and 14, the advantages of the present invention can be provided easily.

Although the example in which the λ/4 shift plate 17 is placed in front of the wavelength conversion element 12 is shown, the λ/4 shift plate can be alternatively placed at any position in the path in which the fundamental waves make a round trip, and the same advantages can be provided.

Therefore, the λ/4 shift plate can be placed in the rear of the solid-state laser element 3, or can be placed between the solid-state laser element 3 and the wavelength conversion element 12.

In this Embodiment 2, the example of rotating the polarization by 90 degrees during one round trip by using the λ/4 shift plate 17 as a method of rotating the polarization is shown.

This example is the one in which each fundamental wave returns to its original polarization during two round trips and forms a round mode.

However, if each fundamental wave returns its original polarization state even if it makes a larger number of round trips than two, a round mode can be formed and an oscillation can be produced.

This variant is implemented by, for example, placing the λ/4 shift plate in such a way that the polarization is rotated by 45 degrees during one round trip.

Further, similarly, instead of using the λ/4 shift plate 17, i.e., instead of only shifting the relative phase between the fast- and slow-axis waves by n during one round trip, the relative phase can be shifted by an integral multiple of n.

Further, even when an arbitrary phase shift is introduced, what is necessary is just to make each fundamental wave return to its original polarization state during a certain number of round trips.

However, in this case, after making a certain number of round trips, not only the relative phase between the fast- and slow-axis waves needs to be an integral multiple of n, but also the polarization direction needs to be its original direction simultaneously.

Also when the polarization direction does not return to its original one completely, only components having the original polarization direction can be combined and an oscillation can be produced.

However, because components which are not combined result in a loss, and the oscillation efficiency degrades.

Further, when the rotation angle of the polarization is other than 90 degrees during one round trip, and when the amount of relative phase shift between the fast- and slow-axis waves is other than an integral multiple of n and rotational polarization occurs on the way, a case in which the direction of the polarization inversion completely matches the polarization direction within the wavelength conversion element 12 is reduced.

In contrast, when rotating the polarization by 90 degrees during one round trip, the direction of the polarization inversion completely matches the polarization direction during one of two round trips.

Taking into consideration the fact that the second harmonic intensity is proportional to the square of the optical electric field, the wavelength conversion efficiency becomes the highest in this case.

As mentioned above, the laser device in accordance with this Embodiment 2 is constructed in such a way that the laser device includes: the solid-state laser element 3 that has gains for plural different wavelengths in plural different axial directions; the wavelength conversion element 12 that has a characteristic of making an optical loss increase with increase in the light intensity for each of light beams with the wavelengths; and the λ/4 shift plate 17 that rotates the polarization of each of fundamental waves, in which the solid-state laser element 3, the wavelength conversion element 12, and the λ/4 shift plate 17 are constructed in such a way as to be included in a resonator for the fundamental waves which are generated by the solid-state laser element 3, and the laser device oscillates at two or more fundamental wave wavelengths.

Therefore, outputted light beams with the plural different wavelengths can be acquired by using the single solid-state laser element 3.

As a result, a small, cheap, and easy to produce laser device can be acquired.

### Embodiment 3.

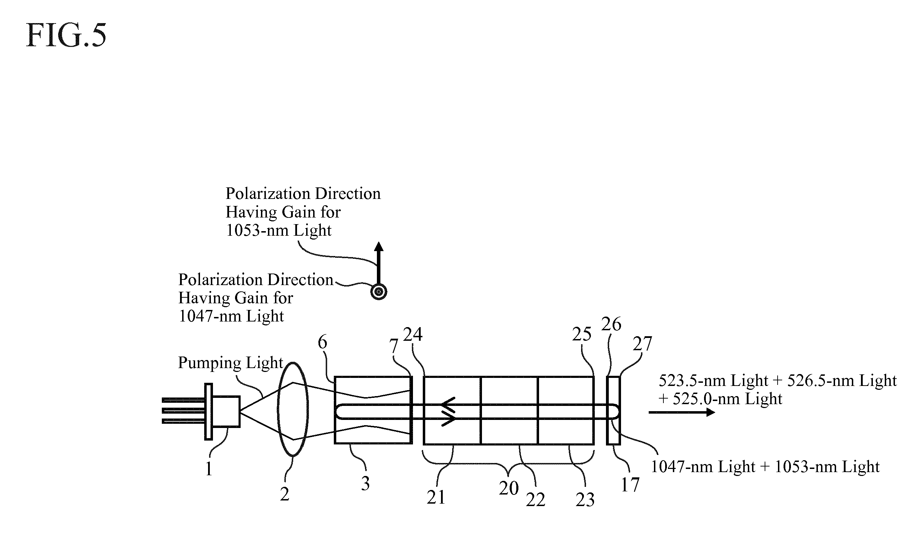

Fig. 5 is a view of the structure of a wide band laser light source device in accordance with Embodiment 3 of the present invention when viewed from a top face thereof.

In the figure, a semiconductor laser 1, a lens 2 that focuses laser light, a solid-state laser element 3, and end surfaces 6 and 7 are the same as those in the case of above-mentioned Embodiment 1.

An end surface 6 of the solid-state laser element 3 has a coating formed thereon and allowing pumping light with a (Nd: YLF excited wavelength) to pass therethrough and reflecting 1047-nm light and 1053-nm light which serve as fundamental waves.

An end surface 7 of the solid-state laser element 3 has a coating formed thereon and reflecting the pumping light and allowing the two fundamental waves to pass therethrough.

In front of the solid-state laser element 3, a wavelength conversion element 20 which is made from MgO-doped LiNbO₃ is placed.

The wavelength conversion element 20 is divided into a portion 21 in which polarization inversion having a period with which to generate SHG light for the 1047-nm light is formed in a direction perpendicular to the page, and a portion 22 in which polarization inversion having a period with which to generate SHG light for the 1053-nm light is formed in a direction perpendicular to the page.

In addition, a portion (sum-frequency generation element) 23 in which polarization inversion is formed in a direction perpendicular to the page is integrally formed in such a way as to generate sum-frequency generation (SFG) light for wavelengths of 1047 nm and 1053 nm.

A λ/4 shift plate 17 is placed in front of the wavelength conversion element 20.

A coating that allows the two fundamental waves to pass therethrough and reflects the SHG light beams for the fundamental waves and the SFG light is formed on an end surface 24 of the wavelength conversion element 20, and a coating that allows the two fundamental waves, the SHG light beams for the fundamental waves, and the SFG light to pass therethrough is on an end surface 25 of the wavelength conversion element 20, and on an end surface 26 of the λ/4 shift plate 17.

A coating that reflects the two fundamental waves and allows the SHG light beams for the fundamental waves and the SFG light to pass therethrough is formed on an end surface 27 of the λ/4 shift plate 17.

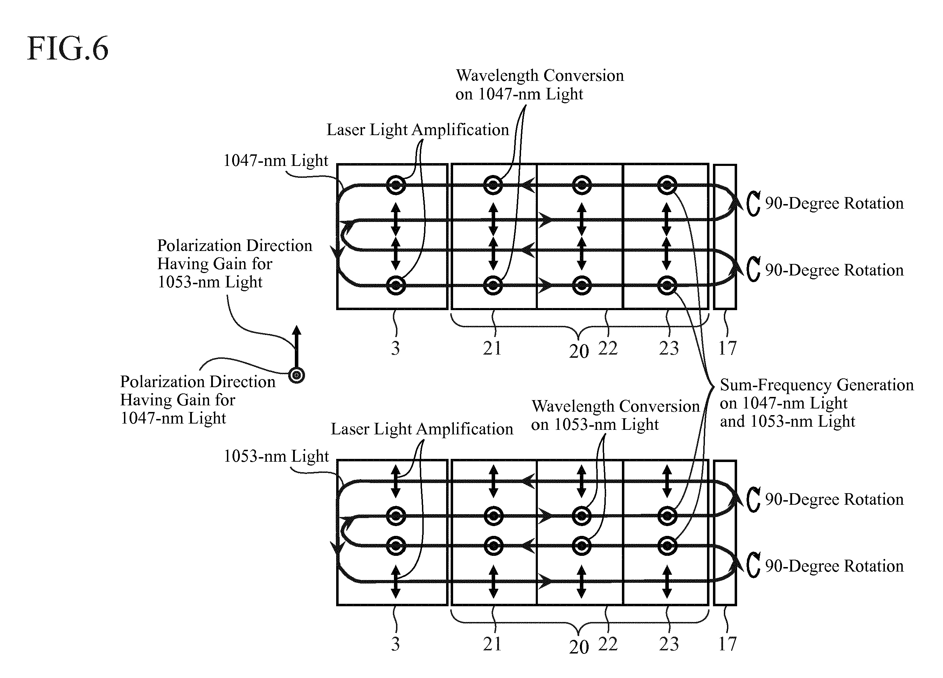

A state of the oscillation of the 1047-nm fundamental wave and the 1053-nm fundamental wave in this device is shown in Fig. 6.

Also in the case of this Embodiment 3, the 1047-nm fundamental wave and the 1053-nm fundamental wave are generated simultaneously on the same principle as that in the case of above-mentioned Embodiment 1.

In the portion 21 of the wavelength conversion element 20, wavelength conversion is performed on the 1047-nm fundamental wave having polarization in a direction perpendicular to the page, and the 523.5-nm SHG light is generated.

In the portion 22, wavelength conversion is performed on the 1053-nm fundamental wave having polarization in a direction perpendicular to the page, and the 526.5-nm SHG light is generated.

In addition, in the portion 23, the 525.0-nm SFG light is generated by the sum-frequency generation on the 1047-nm fundamental wave having polarization in a direction perpendicular to the page, and the 1053-nm fundamental wave similarly having polarization in a direction perpendicular to the page.

These wavelength converted light beams with the three wavelengths are outputted to outside the laser device via the end surface 27.

In the SFG light, a component matching the direction of the polarization inversion of the SFG conversion region contributes to the generation for each of the two fundamental waves.

Therefore, because both the two fundamental waves have a polarization direction perpendicular to the page when the laser device is made to have the structure as shown in this Embodiment 3, the SFG conversion can be carried out with a high degree of efficiency.

In this Embodiment 3, each of the directions of polarization inversion in the portions 21, 22, and 23 in the wavelength conversion element 20 is a direction perpendicular to the page, and therefore each of the portions can be made to have a wavelength conversion function only by changing the period of the polarization inversion.

Therefore, the three regions can be produced through a single process, and can be produced cheaply and easily.

Although the example in which the λ/4 shift plate 17 is placed in front of the wavelength conversion element 20 is shown, the λ/4 shift plate can be alternatively placed at any position in the path in which the fundamental waves make a round trip, and the same advantages can be provided.

Therefore, the λ/4 shift plate can be placed in the rear of the solid-state laser element 3, or can be placed between the solid-state laser element 3 and the wavelength conversion element 20.

A relationship between the amount of relative phase shift between the fast- and slow-axis waves, and the wavelength conversion efficiency is the same as that in the case of above-mentioned Embodiment 2.

As mentioned above, the laser device in accordance with this Embodiment 3 is constructed in such a way that the laser device includes: the solid-state laser element 3 that has gains for plural different wavelengths in plural different axial directions; the wavelength conversion element 20 that performs wavelength conversion on each of light beams with the wavelengths; the portion 23 that performs sum-frequency generation on the light beams with the wavelengths; and the λ/4 shift plate 17 that rotates polarization of each of fundamental waves, in which the solid-state laser element 3, the wavelength conversion element 20, the portion 23, and the λ/4 shift plate 17 are constructed in such a way as to be included in a resonator for the fundamental waves which are generated by the solid-state laser element 3, and the laser device oscillates at two or more fundamental wave wavelengths.

Therefore, outputted light beams with the plural different wavelengths can be acquired by using the single solid-state laser element 3.

As a result, a small, cheap, and easy to produce laser device can be acquired.

### Embodiment 4.

Fig. 7 is a view of the structure of a wide band laser light source device in accordance with Embodiment 4 of the present invention when viewed from a top face thereof.

In the figure, a solid-state laser element 28 is placed in front of a semiconductor laser 1 and a lens 2 that focuses laser light.

The solid-state laser element 28 has a structure of waveguide type, and uses Nd: YLF as a waveguide 29 via which light propagates.

SiO₂ films 30 and 31 whose index of refraction is smaller than the waveguide 29 are formed, as clad layers, on a lower surface and an upper surface of the waveguide 29, respectively.

The thickness of the waveguide is, for example, 100 µm, and the thicknesses of both the clad layers are, for example, 1 µm.

Further, a substrate 32 for holding these elements is bonded, and, as a material from which this substrate 32 is made, a glass material or the like whose linear thermal expansion coefficient is close to that of the waveguide 29 is used.

Further, the thickness of the substrate is made to be around 1 mm in such a way that the substrate can be easily handled.

In front of this solid-state laser element 28 of waveguide type, a wavelength conversion element 35 of waveguide type that similarly has a waveguide structure is placed.

An MgO-doped LiNbO₃ material in which inverse polarization is formed as an optical waveguide portion of this wavelength conversion element 35.

In this optical waveguide portion, a portion 36 having polarization inversion with a period with which to generate SHG light for 1047-nm light, a portion 37 having polarization inversion with a period with which to generate SHG light for 1053-nm light, and a portion 38 in which polarization inversion is formed in such a way as to generate SFG light for wavelengths of 1047 nm and 1053 nm are integrally formed, like in the case of above-mentioned Embodiment 3.

The inverse polarization direction of all the portions 36 to 38 is a direction parallel to the page and is a direction of a thinner side surface of the waveguide.

SiO₂ films 39 and 40 whose index of refraction is smaller than this waveguide are formed, as clad layers, on a lower surface and an upper surface of the waveguide, respectively.

The thickness of the waveguide is, for example, 100 µm, and the thicknesses of both the clad layers are, for example, 1 µm.

Further, a substrate 41 for holding these elements is bonded, and, as a material from which this substrate 41 is made, a glass material or the like whose linear thermal expansion coefficient is close to that of the MgO-doped LiNbO₃ material which is the waveguide of the wavelength conversion element 35 is used.

Further, the thickness of the substrate is made to be around 1 mm in such a way that the substrate can be easily handled.

A λ/4 shift plate 17 is placed in front of the wavelength conversion element 35 of waveguide type.

A coating that allows pumping light with a (Nd: YLF excited wavelength) to pass therethrough and reflects the 1047-nm light and the 1053-nm light which serve as fundamental waves is formed on an end surface 33 of the solid-state laser element 28 of waveguide type, and a coating that reflects the pumping light and allows the two fundamental waves to pass therethrough is formed on an end surface 34 of the solid-state laser element.

A coating that allows the two fundamental waves to pass therethrough and also allows the SHG light beams for the fundamental waves and the SFG light to pass therethrough is formed on an end surface 42 of the wavelength conversion element 35 of waveguide type, and a coating that allows the two fundamental waves, the SHG light beams for the fundamental waves, and the SFG light to pass therethrough is formed on an end surface 43 of the wavelength conversion element 35, and on an end surface 26 of the λ/4 shift plate 17.

A coating that reflects the two fundamental waves and allows the SHG light beams for the fundamental waves and the SFG light to pass therethrough is formed on an end surface 27 of the λ/4 shift plate 17.

By thus forming the elements in the shape of waveguide type, an advantage according to the waveguide type, such as generation of a large gain resulting from a reduction in the number of modes in a vertical direction, can be provided.

Further, taking into consideration shifting the relative phase between the fast- and slow-axis waves using the wavelength shift plate, the effective refractive index differs dependently upon the vertical mode order, and therefore the amount of phase shift differs dependently upon the vertical mode order.

Because this results in a reduction in the conversion efficiency, the number of modes in a vertical direction can be reduced and the wavelength conversion efficiency can be increased by forming the elements in the shape of waveguide type.

Taking into consideration the above explanation, the advantage resulting from making the solid-state laser element or the wavelength conversion element have a waveguide structure can be provided for all of above-mentioned Embodiments 1 to 3.

Although the laser medium that generates the fundamental waves on which SHG conversion is performed is the solid-state laser element in all the above-mentioned embodiments, a gain medium having a plurality of gain wavelengths, for example, a gas laser, a dye laser or a semiconductor laser can be used instead of the solid-state laser element, and, in this variant, the same functions can be implemented.

Further, by using an element in which an optical loss increases with increase in the light intensity instead of the wavelength conversion element, a similar oscillation at a plurality of wavelengths can be produced.

As mentioned above, in the laser device in accordance with this Embodiment 4, the solid-state laser element 28 and the wavelength conversion element 35 are constructed in such a way as to have a waveguide structure.

Therefore, by forming the elements in the shape of waveguide type, a laser device in which the number of modes in a vertical direction is reduced and which generates a large gain can be provided.

While the invention has been described in its preferred embodiments, it is to be understood that an arbitrary combination of two or more of the above-mentioned embodiments can be made, various changes can be made in an arbitrary component in accordance with any one of the above-mentioned embodiments, and an arbitrary component in accordance with any one of the above-mentioned embodiments can be omitted within the scope of the invention.

### INDUSTRIAL APPLICABILITY

As mentioned above, because the laser device in accordance with the present invention is constructed in such a way that the laser device includes a solid-state laser element that has gains for plural different wavelengths in plural different axial directions, and an optical element that has a characteristic of making an optical loss increase with increase in light intensity for each of light beams with the wavelengths, and the solid-state laser element and the optical element are constructed in such a way as to be included in a resonator for fundamental waves which are generated by the solid-state laser element, and the laser device oscillates at two or more wavelengths, the laser device is suitable for use as a light source such as a projector device.

### EXPLANATIONS OF REFERENCE NUMERALS

1 semiconductor laser, 2 lens, 3 and 28 solid-state laser element, 4, 5, and 12 wavelength conversion element (optical element), 6 to 11, 15, 16, 18, 19, 24 to 27, 33, 34, 42, 43 end surface, 13, 14, 21, 22, 36 to 38 portion, 17 λ/4 shift plate (wavelength shift plate), 20 and 35 wavelength conversion element, 23 portion (sum-frequency generation element), 29 waveguide, 30, 31, 39, 40 SiO₂ film, 32 and 41 substrate.

## Claims

1. A laser device comprising:
a solid-state laser element that has gains for plural different wavelengths in plural different axial directions; and
an optical element that has a characteristic of making an optical loss increase with increase in light intensity for each of light beams with the wavelengths,
wherein said solid-state laser element and said optical element are constructed in such a way as to be included in a resonator for fundamental waves which are generated by said solid-state laser element, and said laser device oscillates at two or more wavelengths.

2. The laser device according to claim 1, wherein the optical element is a wavelength conversion element.

3. The laser device according to claim 1, wherein the solid-state laser element and the optical element have a waveguide structure.

4. A laser device comprising:
a solid-state laser element that has gains for plural different wavelengths in plural different axial directions;
an optical element that has a characteristic of making an optical loss increase with increase in light intensity for each of light beams with the wavelengths; and
a wavelength shift plate that rotates polarization of each of fundamental waves,
wherein said solid-state laser element, said optical element, and said wavelength shift plate are constructed in such a way as to be included in a resonator for the fundamental waves which are generated by said solid-state laser element, and said laser device oscillates at two or more fundamental wave wavelengths.

5. The laser device according to claim 4, wherein the optical element is a wavelength conversion element.

6. The laser device according to claim 4, wherein the solid-state laser element and the optical element have a waveguide structure.

7. The laser device according to claim 4, wherein the wavelength shift plate rotates a polarization direction of each of the fundamental waves by about 90 degrees.

8. A laser device comprising:
a solid-state laser element that has gains for plural different wavelengths in plural different axial directions;
a wavelength conversion element that performs wavelength conversion on each of light beams with the wavelengths;
a sum-frequency generation element that performs sum-frequency generation on the light beams with the wavelengths; and
a wavelength shift plate that rotates polarization of each of fundamental waves,
wherein said solid-state laser element, said wavelength conversion element, said sum-frequency generation element, and said wavelength shift plate are constructed in such a way as to be included in a resonator for the fundamental waves which are generated by said solid-state laser element, and said laser device oscillates at two or more fundamental wave wavelengths.

9. The laser device according to claim 8, wherein the solid-state laser element, the wavelength conversion element, and the sum-frequency generation element have a waveguide structure.
